(19) **Europäisches Patentamt**

**European Patent Office**

**Office européen des brevets**

(11) **EP 1 125 970 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.⁷: **C08J 5/18**, B32B 27/36

(21) Anmeldenummer: **01103152.3**

(22) Anmeldetag: **10.02.2001**

(54) **Weiss-opake Folie mit niedriger Transparenz aus einem kristallisierbaren Thermoplasten mit zusätzlicher Funkionalität**

White opaque film with low transparency made from a crystallizable thermoplastic and having additional functionality

Feuille blanche opaque, qui présente une transparence faible, ayant une fontionnalité supplémentaire

(84) Benannte Vertragsstaaten:
**DE FR GB IT LU NL**

(30) Priorität: **19.02.2000 DE 10007719**

(43) Veröffentlichungstag der Anmeldung:
**22.08.2001 Patentblatt 2001/34**

(73) Patentinhaber: **Mitsubishi Polyester Film GmbH 65203 Wiesbaden (DE)**

(72) Erfinder:
• **Murschall, Ursula, Dr.
55283 Nierstein (DE)**

• **Kern, Ulrich, Dr.
55218 Ingelheim (DE)**
• **Oberländer, Klaus
65207 Wiesbaden (DE)**

(74) Vertreter: **Schweitzer, Klaus et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**EP-A- 0 857 749        US-A- 4 780 402
US-A- 5 660 931**

**Beschreibung**

Die Erfindung betrifft eine weiß-opake, biaxial orientierte Folie mit niedriger Transparenz aus einem kristallisierbaren Thermoplasten, deren Dicke im Bereich von 10 bis 500 µm liegt, wobei mindestens eine Folienoberfläche mit einer zusätzlichen Funktionalität versehen ist. Die Folie enthält mindestens Bariumsulfat sowie einen optischen Aufheller und zeichnet sich durch eine gute Verstreckbarkeit, durch eine niedrige Transparenz sowie sehr gute optische und mechanische Eigenschaften aus. Die Erfindung betrifft ferner ein Verfahren zur Herstellung dieser Folie und ihre Verwendung.

In vielen Fällen wird bei Lebensmittelverpackungen eine hohe Sperrwirkung gegenüber Gasen, Wasserdampf und Aromastoffen verlangt. Üblicherweise werden deshalb metallisierte oder mit Polyvinylidenchlorid (PVDC) beschichtete Polypropylenfolien verwendet. Bei mit PVDC beschichteten Folien erfolgt die Beschichtung - ebenso wie bei der Metallisierung - in einem zweiten Arbeitsgang, der die Verpackung deutlich verteuert. Ethylen-Vinylalkohol-Copolymere (EVOH) zeigen ebenfalls eine hohe Sperrwirkung. Aber mit EVOH modifizierte Folien sind besonders empfindlich gegenüber Feuchtigkeit, was den Anwendungsbereich dieser Folien einschränkt. Wegen ihrer schlechten mechanischen Eigenschaften sind sie zudem relativ dick, oder sie müssen kostenintensiv mit anderen Materialien laminiert werden. Außerdem sind mit EVOH modifizierte Folien nach Gebrauch aufwendiger zu entsorgen als andere Folien. Einige Rohstoffe sind zudem für die Herstellung von Lebensmittelverpackungen ungeeignet bzw. nicht behördlich zugelassen

Die US-A 4,780,402 als Stand der Technik beschreibt bereits eine Polyesterfolie die als Weißpigment Bariumsulfat enthält und einen optischen Aufheller. Die US-A beschreibt auch, dass die Folie mit diesen Additiven ein hohes Maß an Opazität besitzt, die durch das Entstehen von Hohlräumen in der Polymermatrix rund um die eingelagerten Partikel der Additive hervorgerufen wird. Die Anwesenheit dieser zahlreichen Hohlräume führt aber dazu, dass die Folie nach der US-A in Bezug auf ihre mechanischen Eigenschaften, ausgedrückt als ihr E-Modul in Längs- und Querrichtung, noch sehr zu wünschen übrig lässt.

Aufgabe der vorliegenden Erfindung war es, eine weiß-opake, biaxial orientierte Folie mit einer Dicke im Bereich von 10 bis 500 µm und mit mindestens einer zusätzlichen Funktionalität bereitzustellen, die neben einer guten Verstreckbarkeit, guten mechanischen sowie optischen Eigenschaften, einer niedrigen Gelbzahl, vor allem einen hohen Weißgrad sowie eine niedrige Transparenz aufweist und die sich einfach und wirtschaftlich herstellen läßt und keine Entsorgungsprobleme verursacht.

Zu den guten, optischen Eigenschaften zählen beispielsweise eine homogene, streifenfreie Einfärbung, eine niedrige Lichttransmission/Transparenz ($\leq$ 30%), ein akzeptabler Oberflächenglanz ($\geq$ 10), sowie eine niedrige Gelbzahl (dickenabhängig, $\leq$ 45 bei 250 µm-Folien, $\leq$ 20 bei 50 µm Folien).

Zu den guten mechanischen Eigenschaften zählt unter anderem ein hoher E-Modul ($E_{MD} \geq 3300$ N/mm$^2$; $E_{TD} \geq 4200$ N/mm$^2$) sowie gute Reißfestigkeitswerte (in MD $\geq$ 120 N/mm$^2$; in TD $\geq$ 170 N/mm$^2$) und schließlich noch gute Reißdehnungswerte in Längs-(MD) und Querrichtung (TD) (in MD $\geq$ 120 %; in TD $\geq$ 50 %).

Zu der guten Verstreckbarkeit zählt, daß sich die Folie bei ihrer Herstellung sowohl in Längs- als auch in Querrichtung hervorragend und ohne Abrisse orientieren läßt.

Darüber hinaus sollte die erfindungsgemäße Folie rezyklierbar sein, d.h. daß während der Folienherstellung im laufenden Betrieb anfallendes Verschnittmaterial wieder in den Produktionsbetrieb zurückgeschleust werden kann, insbesondere ohne Verlust der optischen und der mechanischen Eigenschaften, damit sie beispielsweise auch für Innenanwendungen und im Messebau eingesetzt werden kann.

Gelöst wird diese Aufgabe durch eine weiß-opake Folie mit einer Dicke im Bereich von 10 bis 500 µm, die als Hauptbestandteil einen kristallisierbaren Thermoplasten enthält, mindestens Bariumsulfat und mindestens einen optischen Aufheller, deren Kennzeichenmerkmale darin zu sehen sind, dass die Folie

- einen E-Modul in Längsrichtung von größer/gleich 3300 N/mm$^2$ und
- einen E-Modul in Querrichtung von größer/gleich 4200 N/mm$^2$ besitzt,

daß das Bariumsulfat und/oder der optische Aufheller direkt in den kristallisierbaren Thermoplasten eingearbeitet sind oder als Masterbatch bei der Folienherstellung zudosiert werden und

daß mindestens eine Oberfläche der Folie eine funktionale Beschichtung mit einer Dicke von 5 bis 100 nm trägt.

Die Folie gemäß der Erfindung enthält als Hauptbestandteil einen kristallisierbaren Thermoplasten. Geeignete kristallisierbare bzw. teilkristalline Thermoplaste sind beispielsweise Polyethylenterephthalat, Polybutylenterephthalat, Polyethylennaphthalat, wobei Polyethylenterephthalat bevorzugt ist.

Erfindungsgemäß versteht man unter einem kristallisierbaren Thermoplasten

- kristallisierbare Homopolymere;
- kristallisierbare Copolymere;

- kristallisierbare Compounds;
- kristallisierbares Rezyklat und
- andere Variationen von kristallisierbaren Thermoplasten.

Gegenstand der vorliegenden Erfindung ist auch ein Verfahren zur Herstellung dieser Folie. Es umfaßt:

1) Das Hersfellen-einer-Folie aus mindestens einer Basis- und gegebenenfalls Deckschicht(en) durch Extrusion oder gegebenenfalls Koextrusion;
2) das biaxiale Verstrecken der Folie;
3) das Thermofixieren der verstreckten Folie und
4) das Funktionalisieren mindestens einer Folienoberfläche vor, während oder nach den Schritten b und/oder c.

Die Folie gemäß der Erfindung kann sowohl einschichtig sein, d.h. die Folie hat nur eine Basisschicht und die funktionale Beschichtung, als auch mehrschichtig, d.h. die Folie hat eine Basisschicht, mindestens eine Deckschicht auf der Basisschicht und die funktionale Beschichtung, wobei die Kombination aus Basisschicht und Deckschicht zweckmäßigerweise über die Koextrusions-Technologie hergestellt wird.

Die Folie enthält erfindungsgemäß mindestens Bariumsulfat als Pigment, wobei die Menge an Pigment vorzugsweise im Bereich zwischen 0,2 und 40 Gew.-%, bezogen auf das Gewicht des kristallisierbaren Thermoplasten. Vorzugsweise wird das Bariumsulfat über die sogenannte Masterbatch-Technologie bei der Folienherstellung zudosiert.

Die Folie enthält erfindungsgemäß mindestens einen optischen Aufheller, wobei der optische Aufheller in einer Menge im Bereich von 10 bis 50.000 ppm, insbesondere von 20 bis 30.000 ppm, besonders bevorzugt von 50 bis 25.000 ppm, bezogen auf das Gewicht des kristallisierbaren Thermoplasten, eingesetzt wird. Vorzugsweise wird auch der optische Aufheller über die sogenannte Masterbatch-Technologie bei der Folienherstellung zudosiert.

Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben.

Geeignete optische Aufheller sind Bis-benzoxazole, Phenylcumarine und Bis-sterylbiphenyle, insbesondere Phenylcumarin, besonders bevorzugt ist Triazin-phenylcumarin, das unter der Produktbezeichnung ®Tinopal (Ciba-Geigy, Basel, Schweiz) erhältlich ist, sowie ®Hostalux KS (Clariant, Deutschland) und ®Eastobrite OB-1 (Eastman).

Sofern zweckmäßig, können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland) erwiesen.

Die blauen Farbstoffe werden in Mengen im Bereich von 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Es war völlig überraschend, daß der Einsatz der oben genannten Kombination aus Bariumsulfat und optischem Aufheller und gegebenenfalls blauen Farbstoffen in den Folien in Verbindung mit dem erhöhten Längsstreckverhältnis bei der Folienherstellung zu dem gewünschten Ergebnis führte.

Des weiteren ist sehr überraschend, daß auch das bei der Herstellung der Folie im Betrieb anfallende Verschnittmaterial als Regenerat wieder für den Herstellprozess einsetzbar ist, ohne den Gelbwert der Folie negativ zu beeinflussen.

In einer bevorzugten Ausführungsform der Erfindung werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen gut zu steuern ist. Gefälltes Bariumsulfat kann nach den üblichen Verfahren, die in Kunststoff-Journal 8, Nr. 10, 30-36 und Nr. 11, 36-31 (1974) beschrieben sind, hergestellt werden.

Die Menge an Bariumsulfat liegt erfindungsgemäß im Bereich von 0,2 bis 40 Gew.-%, vorzugsweise von 0,5 bis 30 Gew.-%, besonders bevorzugt von 1 bis 25 Gew.-%, bezogen auf das Gewicht des kristallisierbaren Thermoplasten.

Die mittlere Korngröße des Bariumsulfats ist relativ klein und liegt vorzugsweise im Bereich von 0,1 bis 5 $\mu$m, besonders bevorzugt im Bereich von 0,2 bis 3 $\mu$m (Sedigraphmethode). Die Dichte des verwendeten Bariumsulfates liegt im Bereich zwischen 4 und 5 g/cm$^3$.

In einer besonders bevorzugten Ausführungsform enthält die erfindungsgemäße Folie als Hauptbestandteil ein kristallisierbares Polyethylenterephthalat sowie 1 bis 25 Gew.-% gefälltes Bariumsulfat, zweckmäßigerweise mit einem Teilchendurchmesser im Bereich von 0,4 bis 1 $\mu$m, wobei die Produkte "®Blanc fixe XR-HX" oder "Blanc fixe HXH" von der Firma Sachtleben Chemie, Deutschland, besonders bevorzugt sind.

Der Oberflächenglanz der erfindungsgemäßen Folie, gemessen nach DIN 67530 (Meßwinkel 20°), ist größer/gleich 10, vorzugsweise größer/gleich 15.

Die Lichttransmission (Transparenz) der erfindungsgemäßen Folie, gemessen nach ASTM-D 1003, ist kleiner/gleich 30 %, vorzugsweise kleiner/gleich 25 %. Die Einfärbung ist homogen und streifenfrei über die gesamte Lauflänge und die gesamte Folienbreite.

Durch die synergistische Wirkung der Additive Bariumsulfat, optischer Aufheller, und gegebenenfalls blauem Farbstoff in Verbindung mit einem optimierten Längsstreckverhältnis ist die erfindungsgemäße Folie weißer, d.h. weniger gelbstichig, und weniger lichtdurchlässig, d.h. sie hat eine niedrigere Transparenz als eine nur mit Bariumsulfat als Pigment ausgerüstete Folie.

Der E-Modul (ISO 527-1-2) der erfindungsgemäßen Folie in Längsrichtung liegt bei größer/gleich 3300 N/mm$^2$, vorzugsweise bei größer/gleich 3500 N/mm$^2$. Der E-Modul (ISO 527-1-2) der erfindungsgemäßen Folie in Querrichtung liegt bei größer/gleich 4200 N/mm$^2$, vorzugsweise bei größer/gleich 4400 N/mm$^2$

Die Standardviskosität SV (DCE) von für die erfindungsgemäße Folie vorzugsweise eingesetztem Polyethylenterephthalat, gemessen in Dichloressigsäure nach DIN 53728, liegt im Bereich zwischen 600 und 1100, vorzugsweise zwischen 700 und 1000.

Die intrinsische Viskosität IV (DCE) berechnet sich aus der Standardviskosität SV (DCE) wie folgt:

$$IV\ (DCE) = 6{,}67 \cdot 10^{-4}\ SV\ (DCE) + 0{,}118$$

Die weiß-opake Polyethylenterephtalat-Folie, die mindestens Bariumsulfat, einen optischen Aufheller und gegebenenfalls blauen Farbstoffe enthält, kann sowohl einschichtig als auch mehrschichtig sein.

In der mehrschichtigen Ausführungsform ist die Folie aus mindestens einer Basisschicht und mindestens einer Deckschicht aufgebaut, wobei insbesondere ein dreischichtiger A-B-A oder A-B-C Aufbau bevorzugt ist.

Für die mehrschichtige Ausführungsform ist es zweckmäßig, daß das Polyethylenterephthalat der Basisschicht eine ähnliche Standardviskosität besitzt wie das Polyethylenterephthalat der Deckschicht(en), die unmittelbar an die Basisschicht angrenzt(angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen. In dieser besonderen Ausführungsform haben die Thermoplaste der Deckschichten ebenfalls eine ähnliche Standardviskosität wie das Polyethylenterephthalat der Basisschicht.

In der mehrschichtigen Ausführungsform sind das Bariumsulfat sowie der optische Aufheller und gegebenenfalls der blaue Farbstoff vorzugsweise in der Basisschicht enthalten. Bei Bedarf können aber auch die Deckschichten ausgerüstet sein.

Anders als in der einschichtigen Ausführungsform beziehen sich bei der mehrschichtigen Folie die Mengenangaben der Additive auf das Gewicht der Thermoplasten in der mit dem/den Additiven ausgerüsteten Schicht.

Die erfindungsgemäße Folie kann ggf. auch mindestens einseitig mit einer kratzfesten Beschichtung versehen sein.

Des weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder, Labels oder anderer Werbeartikel eignet.

Die Herstellung der erfindungsgemäßen Folie kann beispielsweise nach einem Extrusionsverfahren in einer Extrusionsstraße erfolgen.

Erfindungsgemäß können das Bariumsulfat, der optische Aufheller und gegebenenfalls der blaue Farbstoff bereits beim Thermoplast-Rohstoffhersteller in den Thermoplasten eingearbeitet oderaltemativ bei der Folienherstellung über die Masterbach-Technologie in den Extruder zudosiert werden.

Besonders bevorzugt ist die Zugabe des Bariumsulfats, des optischen Aufhellers und gegebenenfalls des blauen Farbstoffes über die Masterbatch-Technologie. Dabei werden die Additive in einem festen Trägermaterial voll dispergiert. Als Trägermaterialien kommen der Thermoplast selbst, wie z. B. das Polyethylenterephthalat, oder auch andere Polymere, die mit dem Thermoplasten ausreichend verträglich sind, in Frage.

Wichtig ist, daß die Korngröße und das Schüttgewicht des/der Masterbatches ähnlich der Korngröße und dem Schüttgewicht des Thermoplasten ist, so daß eine homogene Verteilung und damit eine homogener Weißgrad und somit auch eine homogene Opazität erreicht werden.

Die Polyesterfolien können nach bekannten Verfahren aus einem Polyesterrohstoff mit ggf. weiteren Rohstoffen sowie dem optischen Aufheller, dem Bariumsulfat, gegebenenfalls dem blauen Farbstoff und/oder weiteren üblichen Additiven in üblicher Menge von 0,1 bis maximal 10 Gew.-% sowohl als Monofolien als auch als mehrschichtige, ggf. koextrudierte Folien mit gleichen oder unterschiedlich ausgebildeten Oberflächen hergestellt werden, wobei eine Oberfläche beispielsweise pigmentiert ausgerüstet ist und die andere Oberfläche kein Pigment enthält. Zusätzlich ist eine oder beide Oberflächen der Folie nach bekannten Verfahren mit einer funktionalen Beschichtung versehen.

Erfindungsgemäß wird die Folie auf mindestens einer ihrer Oberflächen beschichtet, so daß die Beschichtung auf der fertigen Folie eine Dicke im Bereich von 5 bis 100 nm, bevorzugt von 20 bis 70 nm, insbesondere von 30 bis 50 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wäßrige Lösung, Suspension oder Dispersion. Die genannten Beschichtungen verleihen der Folienoberfläche eine zusätzliche Funktion, beispielsweise wird die Folie dadurch siegelfähig, bedruckbar, metallisierbar, sterilisierbar, antistatisch, oder sie verbessern z. B. die Aromabarriere oder ermöglichen die Haftung zu Materialien, die ohne die Beschichtung nicht auf der Folienoberfläche haften würden (z.B. fotografische Emulsionen). Beispiele für Stoffe/Zusammensetzungen, die zusätzliche Funktionalität verleihen sind:

Acrylate, die bspw. in der WO 94/13476 beschrieben sind, Ethylvinylalkohole, PVDC, Wasserglas ($Na_2SiO_4$), hydrophilische Polyester wie 5-Na-sulfoisophthalsäurehaltige PET/IPA Polyester, wie sie bspw. in der EP-A-0 144 878, der US-A4,252,885 oder in der EP-A-0 296 620 beschrieben sind, Vinylacetate, wie sie bspw. in der WO 94/13481 beschrieben sind, Polyvinylacetate, Polyurethane, Silane, Alkali- oder Erdalkalisalze von $C_{10}$-$C_{18}$-Fettsäuren, Butadiencopolymere mit Acrylnitril oder Methylmethacrylat, Methacrylsäure, Acrylsäure oder deren Ester.

Die Stoffe/Zusammensetzungen, die die zusätzliche Funktionalität verleihen, können die üblichen Additive, wie z.B. Antiblockmittel oder pH-Stabilisatoren in Mengen im Bereich zwischen 0,05 und 5 Gew.-%, vorzugsweise zwischen 0,1 und 3 Gew.-%, enthalten.

Die genannten Stoffe/Zusammensetzungen werden als verdünnte Lösung, Emulsion oder Dispersion vorzugsweise als wäßrige Lösung, Emulsion oder Dispersion auf eine oder beide Folienoberflächen aufgebracht, anschließend wird das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann Schichtdicken von 5 bis 100 nm, bevorzugt 20 bis 70 nm, insbesondere 30 bis 50 nm.

Bei dem bevorzugten Extrusionsverfahren zur Herstellung der Polyesterfolie wird das in dem Extruder aufgeschmolzene Polyestermaterial durch eine Schlitzdüse extrudiert und als weitgehend amorphe Vorfolie auf einer Kühlwalze abgeschreckt. Diese Vorfolie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen erfindungsgemäß bei $T_g$ + 10 K bis $T_g$ + 60 K ($T_g$ = Glastemperatur), das Streckverhältnis der Längsstreckung liegt erfindungsgemäß bei 2 bis 5, insbesondere bei 2,5 bis 4,5, das der Querstreckung bei 2 bis 5, insbesondere bei 3 bis 4,5, und das der ggf. durchgeführten zweiten Längsstreckung bei 1,1 bis 3. Die erste Längsstreckung kann ggf. gleichzeitig mit der Querstreckung (Simultanstreckung) durchgeführt werden. Anschließend an die Streckung folgt die Thermofixierung der Folie bei Ofentemperaturen im Bereich von 200 bis 260 °C, insbesondere von 220 bis 250 °C. Anschließend an die Thermofixierung wird die Folie abgekühlt und aufgewickelt.

Es hat sich völlig unerwartet herausgestellt, daß die Verfahrensparameter der Längsstreckung eine wesentliche Einflussgröße darstellen, von der die optischen Eigenschaften (Transparenz) der Folie abhängen. Zu den Verfahrensparametern der Längsrichtung gehören insbesondere das Längsstreckverhältnis und die Längsstrecktemperatur. Völlig überraschend konnte durch Variation des Längsstreckverhältnisses die Transparenz stark beeinflusst werden. Erhält man beispielsweise auf einer Folienanlage eine Folie, deren Transparenzwerte oberhalb der erfindungsgemäßen Werte liegen, so können erfindungsgemäße Folien mit niedrigerer Transparenz hergestellt werden, indem man in der Längsstreckung das Längsstreckverhältnis erhöht. Eine Erhöhung des Längsstreckverhältnisses um relativ 7 % ergab eine Reduzierung der Transparenz um relativ 15 bis 20 %.

Ein großer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis zu 50 Gew.-%, bevorzugt im Bereich von 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium, in Lebensmittelanwendungen und je nach Funktionalität einer oder beider Oberflächen als fotografischer Film, als grafischer Film, laminierfähiger Film, metallisierbarer Film oder bedruckbarer Film.

Die Erfindung wird im folgenden anhand von Ausführungsbeispielen näher erläutert.

Die Messung der einzelnen Eigenschaften erfolgt dabei gemäß der folgenden Normen bzw. Verfahren.

**Meßmethoden**

**Oberflächenglanz**

Der Oberflächenglanz wird bei einem Meßwinkel von 20° nach DIN 67530 gemessen.

**Lichttransmission/Transparenz**

Unter der Lichttransmission/Transparenz ist das Verhältnis des insgesamt durchgelassenen Lichtes zur einfallenden Lichtmenge zu verstehen.

Die Lichttransmission wird mit dem Messgerät "Hazegard plus" nach ASTM D 1003 gemessen.

**Oberflächendefekte, homogene-Einfärbung**

Die Oberflächendefekte und die homogene Einfärbung werden visuell bestimmt.

**Mechanische Eigenschaften**

Der E-Modul, die Reißfestigkeit und die Reißdehnung werden in Längs- und Querrichtung nach ISO 527-1-2 gemessen.

**SV (DCE), IV (DCE)**

Die Standardviskosität SV (DCE) wird angelehnt an DIN 53726 in Dichloressigsäure gemessen.
Die intrinsische Viskosität (IV) berechnet sich wie folgt aus der Standardviskosität (SV)

$$IV\ (DCE) = 6,67 \cdot 10^{-4}\ SV\ (DCE) + 0,118$$

**Gelbwert**

Der Gelbwert YID ist die Abweichung von der Farblosigkeit in Richtung "Gelb" und wird gemäß DIN 6167 gemessen.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2° Normalbeobachter. Der Weißgrad wird als WG = RY + 3RZ - 3RX definiert.
WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

In den nachstehenden Beispielen und Vergleichsbeispielen handelt es sich jeweils um einschichtige weiß-opake Folien, die auf der beschriebenen Extrusionsstraße hergestellt werden.

**Beispiel 1**

Es wurde eine 50 µm dicke, weiß-opake Folie hergestellt, die als Hauptbestandteil Polyethylenterephthalat (RT32, KoSa, Deutschland), 18 Gew.-% Bariumsulfat (®Blanc fixe XR-HX, Sachtleben Chemie), 200 ppm optischen Aufheller (®Tinopal, Ciba-Geigy, Basel) und 40 ppm blauen Farbstoff (®Sudanblau 2, BASF Ludwigshafen) enthielt. Die Additive Bariumsulfat, optischer Aufheller und blauer Farbstoff wurden als Masterbatches zugegeben.

Das Polyethylenterephthalat, das zur Herstellung der Masterbatche verwendet wurde, hatte eine Standardviskosität SV (DCE) im Bereich von 900 bis 1100.

Das Masterbatch (1) setzte sich aus Klarrohstoff, 50 Gew.-% Bariumsulfat und 600 ppm optischem Aufheller zusammen. Das Masterbatch (2) enthielt neben Klarrohstoff 2000 ppm blauen Farbstoff.

Vor der Extrusion wurden 36 Gew.-% des Masterbatch (1), 2 Gew.-% des Masterbatch (2), und 62 Gew.-% Klarrohstoff bei einer Temperatur von 150 °C getrocknet und anschließend im Extruder aufgeschmolzen. Die Schmelze wurde durch eine Breitschlitzdüse extrudiert, mittels einer Kühlwalze abgekühlt und danach weiterverarbeitet.

Das bei der Folienherstellung eingestellte Längsstreckverhältnis betrug 3,1. Nach der Längsstreckung wurde die Folie mittels "Reverse gravure-roll coating"-Verfahren mit einer wässrigen Dispersion beidseitig beschichtet. Die Dispersion enthielt neben Wasser 4,2 Gew.-% hydrophilischen Polyester (5-Na-sulfoisophthalsäurehaltiges PET/IPA Polyester, ®SP41, Ticona, USA), 0,15 Gew.-% kolloidales Siliziumdioxid (®Nalco 1060, Deutsche Nalco Chemie, Deutschland) als Antiblockmittel sowie 0,15 Gew.-% Ammoniumcarbonat (Merck, Deutschland) als pH-Puffer. Das Nassantragsgewicht betrug 2 g/m$^2$ pro beschichtete Seite. Nach der Querstreckung lag die berechnete Dicke der Beschichtung bei 40 nm.

**Beispiel 2**

Beispiel **1** wurde wiederholt. Die Folie wurde jedoch nicht mit blauem Farbstoff ausgerüstet.

**Beispiel 3**

Die Rezepturierung der Folie nach Beispiel 3 und ihre Beschichtung entsprach der der Folie nach Beispiel 2. Das Längsstreckverhältnis wurde aber auf 3,3 erhöht, während die eingestellten Längstrecktemperaturen unverändert blieben.

**Beispiel 4**

Es wurde eine 75 um dicke, koextrudierte weiß-opake ABA-Folie hergestellt, wobei A die Deckschichten und B die Basisschicht symbolisiert. Die Rezeptur der 71 μm dicken Basisschicht entsprach der Rezeptur des Beispiels 2. Die 2 μm dicken Deckschichten enthielten 93 Gew.-% Klarrohstoff sowie 7 Gew.-% eines Masterbatches, das neben Klarrohstoff 10.000 ppm Siliciumdioxid (®Sylobloc, Grace, Deutschland) enthielt. Diese Folie zeichnet sich durch einen hohen Oberflächenglanz aus. Das Längsstreckverhältnis betrug 3,3. Die Folie wurde analog Beispiel 1 beschichtet, jedoch nur einseitig.

**Vergleichsbeispiel 1**

Beispiel 3 wurde wiederholt. Das Längsstreckverhältnis wurde auf 2,8 reduziert, die eingestellten Längstrecktemperaturen blieben unverändert. Die Folie wurde nach der Längsstreckung nicht beschichtet.

**Vergleichsbeispiel 2**

Vergleichsbeispiel 1 wurde wiederholt. Die Folie wurde jedoch nicht mit optischem Aufheller ausgerüstet. Die Folie enthielt nur 18 Gew:% Bariumsulfat, das beim Rohstoffhersteller direkt eingearbeitet wurde. Die Standardviskosität des Bariumsulfat enthaltenden Rohstoffes betrug 810. Die Folie wurde nach der Längsstreckung nicht beschichtet.

Die nach den Beispielen 1 bis 4 hergestellten weiß-opaken PET-Folien und die nach den Vergleichsbeispielen 1 und 2 hergestellten Folien hatten das in der nachfolgenden Tabelle dargestellte Eigenschaftsprofil:

Tabelle

| Eigenschaften | Bsp. 1 | Bsp.2 | Bsp.3 | Bsp.4 | Vgl. Bsp.1 | Vgl. Bsp.2 |
|---|---|---|---|---|---|---|
| Dicke [μm] | 50 | 50 | 50 | 75 | 50 | 50 |
| Oberflächenglanz 1. Seite | 20 | 20 | 20 | 165 | 20 | 20 |
| (Meßwinkel 20°) 2. Seite | 20 | 20 | 20 | 165 | 20 | 20 |
| Lichttransmission/ Transparenz [%] | 20 | 20 | 16 | 12 | 25 | 24 |
| Gelbzahl (YID) | 12 | 14 | 14 | 18 | 15 | 24 |
| Weißgrad nach Berger [%] | 93 | 91 | 91 | 90 | 91 | 84 |
| E-Modul längs [N/mm$^2$] | 3600 | 3600 | 3650 | 3650 | 3350 | 3500 |

Tabelle   (fortgesetzt)

| Eigenschaften | Bsp. 1 | Bsp.2 | Bsp.3 | Bsp.4 | Vgl. Bsp.1 | Vgl. Bsp.2 |
|---|---|---|---|---|---|---|
| E-Modul quer [N/mm$^2$] | 5200 | 5300 | 5200 | 5300 | 5300 | 5300 |
| Reißfestigkeit längs [N/mm$^2$] | 150 | 155 | 155 | 150 | 150 | 150 |
| Reißfestigkeit quer [N/mm$^2$] | 240 | 240 | 235 | 240 | 250 | 250 |
| Reißdehnung längs [%] | 180 | 175 | 175 | 170 | 180 | 175 |
| Reißdehnung quer [%] | 70 | 75 | 75 | 75 | 70 | 80 |
| Einfärbung | strahlend weiß | strahlend weiß | strahlend weiß | strahlend weiß | strahlend weiß | gelbstichig |
| Haftung gegenüber Druckfarben und fotografischen Emulsionen 1 = hervorragend; 2 = schlecht | 1 | 1 | 1 | einseitig 1 | 2 | 2 |

**Patentansprüche**

1.  Weiß-opake Folie mit einer Dicke im Bereich von 10 bis 500 µm, die als Hauptbestandteil einen kristallisierbaren Thermoplasten enthält, mindestens Bariumsulfat und mindestens einen optischen Aufheller, **dadurch gekennzeichnet, dass** die Folie

    -   einen E-Modul in Längsrichtung von größer/gleich 3300 N/mm$^2$ und
    -   einen E-Modul in Querrichtung von größer/gleich 4200 N/mm$^2$

    besitzt, daß das Bariumsulfat und/oder der optische Aufheller direkt in den kristallisierbaren Thermoplasten eingearbeitet sind oder als Masterbatch bei der Folienherstellung zudosiert werden und daß mindestens eine Oberfläche der Folie eine funktionale Beschichtung mit einer Dicke im Bereich von 5 bis 100 nm trägt.

2.  Folie nach Anspruch 1, **dadurch gekennzeichnet, daß** der kristallisierbare Thermoplast ausgewählt ist aus der Gruppe Polyethylenterephthalat, Polybutylenterephthalat oder Polyethylennaphthalat.

3.  Folie nach Anspruch 1 oder 2, **dadurch gekennzeichnet, daß** sie Bariumsulfat als Pigment in einer Menge im Bereich zwischen 0,2 und 40 Gew.-% enthält, bezogen auf das Gewicht des kristallisierbaren Thermoplasten, und daß das Bariumsulfat über die Masterbatch-Technologie bei der Folienherstellung zudosiert wird.

4.  Folie nach einem der Ansprüche 1 bis 3, **dadurch gekennzeichnet, daß** sie den optischen Aufheller in einer Menge im Bereich von 10 bis 50.000 ppm enthält, bezogen auf das Gewicht des kristallisierbaren Thermoplasten, und daß der optische Aufheller über die Masterbatch-Technologie bei der Folienherstellung zudosiert wird.

5.  Folie nach Anspruch 4, **dadurch gekennzeichnet, daß** der optische Aufheller ausgewählt ist aus der Gruppe enthaltend Bis-benzoxazole, Phenylcumarine oder Bis-sterylbiphenyle, insbesondere Triazin-phenylcumarin.

6.  Folie nach einem der Ansprüche 1 bis 5, **dadurch gekennzeichnet, daß** sie zusätzlich zu dem optischen Aufheller auch noch einen in Polyester löslichen blauen Farbstoff enthält ausgewählt aus der Gruppe enthaltend Kobaltblau, Ultramarinblau, Anthrachinonfarbstoffe oder Kombinationen von diesen, insbesondere Sudanblau, und daß sie die Folie den blauen Farbstoff in Mengen im Bereich von 10 bis 10.000 ppm, bezogen auf das Gewicht des kristallisierbaren Thermoplasten, enthält.

7.  Folie nach einem der Ansprüche 1 bis 6, **dadurch gekennzeichnet, daß** sie als Bariumsulfat gefälltes Bariumsulfat enthält in einer Menge im Bereich von 0,5 bis 30 Gew.-%, bezogen auf das Gewicht des kristallisierbaren Thermoplasten, und daß die mittlere Korngröße des Bariumsulfats im Bereich von 0,1 bis 5 µm, (Sedigraphmethode) liegt.

8. Folie nach einem der Ansprüche 1 bis 7, **dadurch gekennzeichnet, daß** sie einen Oberflächenglanz, gemessen nach DIN 67530 (Meßwinkel 20°), von ≥ 10, besitzt, daß sie eine Lichttransmission (Transparenz), gemessen nach ASTM-D 1003, von ≤ 30 %, besitzt und daß ihre Einfärbung homogen und streifenfrei ist über die gesamte Lauflänge und die gesamte Folienbreite.

9. Folie nach einem der Ansprüche 1 bis 8, **dadurch gekennzeichnet, daß** sie einschichtig oder mehrschichtig ist, wobei sie in der mehrschichtigen Form mindestens eine Basisschicht und mindestens eine Deckschicht enthält und wobei insbesondere ein dreischichtiger A-B-A oder A-B-C Aufbau bevorzugt ist.

10. Folie nach einem der Ansprüche 1 bis 9, **dadurch gekennzeichnet, daß** auf mindestens einer ihrer Oberflächen eine funktionale Beschichtung mit einer Dicke im Bereich von 20 bis 70 nm, trägt, wobei die Beschichtung als Lösung, Suspension oder Dispersion aufgetragen ist, und daß die Beschichtung Stoffe/Zusammensetzungen enthält ausgewählt aus der Gruppe enthaltend Acrylate, Ethylvinylalkohole, PVDC, Wasserglas ($Na_2SiO_4$), hydrophilische Polyester wie 5-Na-sulfoisophthalsäurehaltige PET/IPA Polyester, Vinylacetate, Polyvinylacetate, Polyurethane, Silane, Alkali- oder Erdalkalisalze von $C_{10}$- bis $C_{18}$-Fettsäuren, Butadiencopolymere mit Acrylnitril oder Methylmethacrylat, Methacrylsäure, Acrylsäure oder deren Ester und Mischungen von diesen.

11. Folie nach Anspruch 10, **dadurch gekennzeichnet, daß** die Beschichtung zusätzliche Additive wie Antiblockmittel oder pH-Stabilisatoren in Mengen im Bereich zwischen 0,05 und 5 Gew.-%, enthält.

12. Verfahren zum Herstellen einer Folie nach einem der Ansprüche 1 bis 11, bei dem der kristallisierbare Thermoplast in einem Extruder aufgeschmolzen und verdichtet wird, bei dem dann das aufgeschmolzene Thermoplastmaterial durch eine Schlitzdüse extrudiert und als weitgehend amorphe Vorfolie auf einer Kühlwalze abgeschreckt, anschließend erneut erhitzt und in Längs- und Querrichtung bzw. in Quer- und in Längsrichtung bzw. in Längs-, in Quer- und nochmals in Längsrichtung und/oder Querrichtung gestreckt wird, **dadurch gekennzeichnet, daß** die Strecktemperaturen im Bereich von $T_g$ + 10 K bis $T_g$ + 60 K eingestellt werden und daß das Streckverhältnis der Längsstreckung im Bereich von 2 bis 5, das der Querstreckung im Bereich von 2 bis 5, und das der ggf. durchzuführenden zweiten Längsstreckung im Bereich von 1,1 bis 3 eingestellt wird.

13. Verfahren nach Anspruch 12, **dadurch gekennzeichnet, daß** die erste Längsstreckung gleichzeitig mit der Querstreckung (Simultantstreckung) durchgeführt wird.

14. Verfahren nach Anspruch 12 oder 13, **dadurch gekennzeichnet, daß** nach der Streckung die Thermofixierung der Folie bei Ofentemperaturen im Bereich von 200 bis 260 °C, durchgeführt wird.

15. Verfahren nach einem der Ansprüche 12 bis 14, **dadurch gekennzeichnet, daß** die Transparenz der Folie über das Längsstreckverhältnis und/oder über die Längsstrecktemperatur eingestellt wird.

16. Verfahren nach einem der Ansprüche 12 bis 15, **dadurch gekennzeichnet, daß** bei der Herstellung der Folie Regenerat in einer Menge von bis zu 50 Gew.-%, bezogen auf das Gesamtgewicht der Folie, wiederverwendet wird.

17. Verwendung einer Folie nach einem der Ansprüche 1 bis 11 für Innenraumverkleidungen, für Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium, in Lebensmittelanwendungen und je nach Funktionalität einer oder beider Oberflächen als fotografischer Film, als grafischer Film, als laminierfähiger oder metallisierbarer Film oder als bedruckbarer Film.

**Claims**

1. An opaque white film with a thickness of from 10 to 500 µm whose principal constituent is a crystallizable thermoplastic, at least barium sulfate and at least one optical brightener, wherein the film has

   - a longitudinal modulus of elasticity greater than or equal to 3300 N/mm$^2$ and
   - a transverse modulus of elasticity greater than or equal to 4200 N/mm$^2$

wherein the barium sulfate and/or the optical brightener have been incorporated directly into the crystallizable thermoplastic or are fed as a masterbatch during film production, and wherein at least one surface of the film bears a functional coating with a thickness of from 5 to 100 nm.

2. The film as claimed in claim 1, wherein the crystallizable thermoplastic has been selected from the group consisting of polyethylene terephthalate, polybutylene terephthalate and polyethylene naphthalate.

3. The film as claimed in claim 1 or 2, wherein from 0.2 to 40 % by weight of barium sulfate is present as pigment in the film, based on the weight of the crystallizable thermoplastic, and wherein the barium sulfate is fed by way of masterbatch technology during film production.

4. The film as claimed in any one of claims 1 to 3, wherein, based on the weight of the crystallizable thermoplastic, from 10 to 50 000 ppm of optical brightener is present in the film, and wherein the optical brightener is fed by way of masterbatch technology during film production.

5. The film as claimed in claim 4, wherein the optical brightener has been selected from the group consisting of bisbenzoxazoles, phenylcoumarins and bisstyrylbiphenyls, in particular triazine phenylcoumarin.

6. The film as claimed in any one of claims 1 to 5, wherein, in addition to the optical brightener, a polyester-soluble blue dye selected from the group consisting of cobalt blue, ultramarine blue, anthraquinone dyes or combinations of these, in particular Sudan Blue, is also present in the film, and wherein the amount of blue dye present in the film is from 10 to 10 000 ppm based on the weight of the crystallizable thermoplastic.

7. The film as claimed in any one of claims 1 to 6, wherein the barium sulfate is present as precipitated barium sulfate in the film in an amount of from 0.5 to 30 % by weight based on the weight of the crystallizable thermoplastic, and wherein the average grain size of the barium sulfate is from 0.1 to 5 $\mu$m (Sedigraph method).

8. The film as claimed in any one of claims 1 to 7, wherein the surface gloss of the film, measured to DIN 67530 (measurement angle 20 °) is $\geq$ 10, wherein the luminous transmittance (transparency) of the film, measured to ASTM-D 1003 is $\leq$ 30 %, and wherein the coloration of the film is uniform and streak-free over its entire running length and entire width.

9. The film as claimed in any one of claims 1 to 8, wherein the film has one or more layers, and the form having more than one layer comprises at least one base layer and at least one outer layer, and particular preference is given to a three-layer A-B-A or A-B-C structure.

10. The film as claimed in any one of claims 1 to 9, wherein at least one of the surfaces of the film bears a functional coating with a thickness of from 20 to 70 nm, and the coating has been applied as solution, suspension or dispersion, and wherein the coating comprises substances/compositions selected from the group consisting of acrylates, ethyl-vinyl alcohols, PVDC, waterglass ($Na_2SiO_4$), hydrophilic polyesters, such as PET/IPA polyesters containing the sodium salt of 5-sulfoisophthalic acid, and of vinyl acetates, polyvinyl acetates, polyurethanes, silanes, the alkali metal or alkaline earth metal salts of $C_{10}$-$C_{18}$ fatty acids, butadiene copolymers with acrylonitrile or methyl methacrylate, methacrylic acid, acrylic acid or esters thereof and mixtures of these.

11. The film as claimed in claim 10, wherein the coating comprises from 0.05 to 5 % by weight of additional additives, such as antiblocking agents or pH stabilizers.

12. A process for producing the film as claimed in any one of claims 1 to 11, in which the crystallizable thermoplastic is melted in an extruder and compacted, and then the molten thermoplastic material is extruded through a slot die and quenched on a chill roll, as a substantially amorphous prefilm, and then reheated and stretched longitudinally and transversely, or transversely and longitudinally, or longitudinally, transversely and again longitudinally and/or transversely, which comprises establishing the stretching temperatures at from $T_g$ + 10 K to $T_g$ + 60 K and establishing a longitudinal stretching ratio of from 2 to 5 and a transverse stretching ratio of from 2 to 5, and establishing a ratio of from 1.1 to 3 for the second longitudinal stretching which may, if desired, be carried out.

13. The process as claimed in claim 12, wherein the first longitudinal stretching is carried out simultaneously with the transverse stretching (simultaneous stretching).

**14.** The process as claimed in claim 12 or 13, wherein, following the stretching, the heat-setting of the film is carried out at oven temperatures of from 200 to 260 °C.

**15.** The process as claimed in any one of claims 12 to 14, wherein the transparency of the film is established by way of the longitudinal stretching ratio and/or by way of the longitudinal stretching temperature.

**16.** The process as claimed in any one of claims 12 to 15, wherein during film production regrind is used again in an amount of up to 50 % by weight, based in each case on the total weight of the film.

**17.** The use of a film as claimed in any one of claims 1 to 11 for interior decoration, for constructing exhibition stands, for exhibition requisites, for displays, for placards, for labels, for protective glazing of machines or of vehicles, in the lighting sector, in the fitting out of shops or of stores, as a promotional requisite or a laminating material, in applications associated with food or drink or, depending on the functionality of one or both surfaces, as a photographic film, as a graphic film, as a laminatable or metallizable film or as a printable film.


**Revendications**

**1.** Film blanc opaque ayant une épaisseur dans la plage de 10 à 500 µm, qui contient, une matière thermoplastique cristallisable en tant que composant principal, au moins du sulfate de baryum et au moins un azurant optique, **caractérisé en ce que** le film présente

- un module d'élasticité dans le sens longitudinal supérieur ou égal à 3 300 N/mm$^2$ et
- un module d'élasticité dans le sens transversal supérieur ou égal à 4 200 N/mm$^2$,

**en ce que** le sulfate de baryum et/ou l'azurant optique sont incorporés directement dans la matière thermoplastique cristallisable ou sont ajoutés par addition dosée en tant que mélange-maître lors de la fabrication du film, et **en ce qu'**au moins une phase du film porte un revêtement fonctionnel ayant une épaisseur dans la plage de 5 à 100 nm.

**2.** Film selon la revendication 1, **caractérisé en ce que** la matière thermoplastique cristallisable est choisie dans le groupe constitué par le poly(éthylène*-téréphtalate), le poly(butylène-téréphtalate) et le poly(butylène-naphtalate).

**3.** Film selon la revendication 1 ou 2, **caractérisé en ce qu'**il contient du sulfate de baryum en tant que pigment, en une proportion dans la plage comprise entre 0,2 et 40 % en poids, par rapport au poids de la matière thermoplastique cristallisable, et **en ce que** le sulfate de baryum est ajouté par addition dosée, au moyen de la technique de mélange-maître, lors de la fabrication du film.

**4.** Film selon l'une quelconque des revendications 1 à 3, **caractérisé en ce qu'**il contient l'azurant optique en une proportion dans la plage de 10 à 50 000 ppm, par rapport au poids de la matière thermoplastique cristallisable, et **en ce que** l'azurant optique est ajouté par addition dosée, au moyen de la technique de mélange-maître, lors de la fabrication du film.

**5.** Film selon la revendication 4, **caractérisé en ce que** l'azurant optique est choisi dans le groupe comprenant des bis-benzoxazoles, des phénylcoumarines ou des bis-styrylbiphényles, en particulier de la triazine-phénylcoumarine.

**6.** Film selon l'une quelconque des revendications 1 à 5, **caractérisé en ce qu'**en plus de l'azurant optique il contient en outre un colorant bleu soluble dans le polyester, choisi dans le groupe comprenant le bleu de cobalt, le bleu outremer, des colorants anthraquinoniques ou des associations de ceux-ci, en particulier du bleu Soudan, et **en ce que** le film contient le colorant bleu en proportions dans la plage de 10 à 10 000 ppm, par rapport au poids de la matière thermoplastique cristallisable.

**7.** Film selon l'une quelconque des revendications 1 à 6, **caractérisé en ce qu'**il contient en tant que sulfate de baryum du sulfate de baryum précipité, en une proportion dans la plage allant de 0,5 à 30 % en poids, par rapport au poids de la matière thermoplastique cristallisable, et **en ce que** la taille moyenne de grain du sulfate de baryum se situe dans la plage allant de 0,1 à 5 µm (méthode au sédigraphe).

**8.** Film selon l'une quelconque des revendications 1 à 7, **caractérisé en ce qu'**il présente un brillant superficiel, mesuré selon DIN 67530 (angle de mesure 20°), supérieur ou égal à 10, **en ce qu'**il présente une transmission de la lumière (transparence), mesurée selon ASTM-D 1003, inférieure ou égale à 30 %, et **en ce que** sa coloration est uniforme et dépourvue de stries sur toute la longueur de cheminement du film et sur toute la largeur du film.

9. Film selon l'une quelconque des revendications 1 à 8, **caractérisé en ce qu'**il est monocouche ou multicouche, celui-ci comportant dans la forme multicouche au moins une couche de base et au moins une couche de recouvrement, et en particulier une structure tricouche A-B-A ou A-B-C étant préférée.

10. Film selon l'une quelconque des revendications 1 à 9, **caractérisé en ce qu'**il porte sur au moins l'une de ses faces un revêtement fonctionnel ayant une épaisseur dans la plage de 20 à 70 nm, le revêtement étant appliqué sous forme de solution, suspension ou dispersion, et **en ce que** le revêtement contient des substances/compositions choisies dans le groupe comprenant des acrylates, des alcools éthylvinyliques, du PVDC, du verre soluble ($Na_2SiO_4$), des polyesters hydrophiles tels que des polyesters PET/IPA contenant du sulfo-isophtalate pentasodique, des acétates de vinyle, des poly-(acétate de vinyle)s, des polyuréthannes, des silanes, des sels alcalins ou alcalino-terreux d'acides gras en $C_{10}$-$C_{18}$, des copolymères de butadiène avec l'acrylonitrile ou le méthacrylate de méthyle, de l'acide méthacrylique, de l'acide acrylique ou leurs esters, et des mélanges de ceux-ci.

11. Film selon la revendication 10, **caractérisé en ce que** le revêtement contient des additifs supplémentaires tels que des agents anti-adhérence de contact ou des stabilisants du pH, en proportions dans la plage comprise entre 0,05 et 5 % en poids.

12. Procédé pour la fabrication d'un film selon l'une quelconque des revendications 1 à 11, dans lequel la matière thermoplastique cristallisable est fondue et compactée dans une extrudeuse, dans lequel la matière thermoplastique fondue est extrudée à travers une filière plate et, sous forme de préfilm essentiellement amorphe, refroidie brusquement sur un cylindre refroidisseur, ensuite chauffée de nouveau et étirée dans le sens longitudinal et dans le sens transversal ou dans le sens transversal et dans le sens longitudinal ou dans le sens longitudinal, dans le sens transversal et encore une fois dans le sens longitudinal et/ou dans le sens transversal, **caractérisé en ce que** les températures d'étirage sont réglées dans la plage de $T_g$ + 10 K à $T_g$ + 60 K et **en ce que** le rapport d'étirage de l'étirage longitudinal est réglé dans la plage de 2 à 5, celui de l'étirage transversal est réglé dans la plage de 2 à 5 et celui du second étirage longitudinal à effectuer éventuellement est réglé dans la plage de 1,1 à 3.

13. Procédé selon la revendication 12, **caractérisé en ce que** le premier étirage longitudinal est effectué en même temps que l'étirage transversal (étirage simultané).

14. Procédé selon la revendication 12 ou 13, **caractérisé en ce qu'**après l'étirage s'effectue le thermofixage du film à des températures de four dans la plage de 200 à 260°C.

15. Procédé selon l'une quelconque des revendications 12 à 14, **caractérisé en ce que** la transparence du film est ajustée au moyen du rapport d'étirage longitudinal et/ou au moyen de la température d'étirage longitudinal.

16. Procédé selon l'une quelconque des revendications 12 à 15, **caractérisé en ce que** lors de la fabrication du film on réutilise un produit de régénération en une proportion allant jusqu'à 50 % en poids, par rapport au poids total du film.

17. Utilisation d'un film selon l'une quelconque des revendications 1 à 11, pour des habillages d'intérieur, pour la construction d'expositions et d'articles d'exposition, pour des afficheurs, pour des écriteaux, pour des étiquettes, pour des vitrages protecteurs de machines et de véhicules, dans le secteur de l'éclairage, dans la construction de magasins et de rayonnages, en tant qu'articles publicitaires, milieu de contrecollage, dans des applications alimentaires et, selon la fonctionnalité d'une ou des deux faces, en tant que film photographique, en tant que film graphique, en tant que film stratifiable ou métallisable, ou en tant que film imprimable.